(19) Europäisches Patentamt
European Patent Office
Office européen des brevets

(11) Veröffentlichungsnummer: **0 582 886 A1**

# (12) EUROPÄISCHE PATENTANMELDUNG

(21) Anmeldenummer: **93111915.0**

(51) Int. Cl.5: **C09B 62/44**, D06P 3/66

(22) Anmeldetag: **26.07.93**

(30) Priorität: **06.08.92 DE 4226045**

(43) Veröffentlichungstag der Anmeldung:
**16.02.94 Patentblatt 94/07**

(84) Benannte Vertragsstaaten:
**CH DE FR GB LI**

(71) Anmelder: **BAYER AG**
**D-51368 Leverkusen(DE)**

(72) Erfinder: **Jäger, Horst, Dr.**
**Carl-Rumpff-Strasse 37**
**D-51373 Leverkusen(DE)**

## (54) Phthalocyaninreaktivfarbstoffe.

(57) Phthalocyaninreaktivfarbstoffe, die in Form der freien Säure der Formel (1) entsprechen

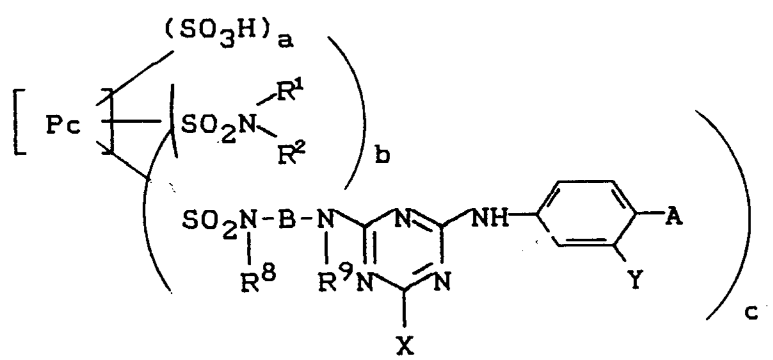

(1)

worin die variablen Reste die in der Beschreibung genannte Bedeutung haben, werden durch Kondensation der entsprechenden Amine mit Cyanurfluorid oder Cyanurchlorid in beliebiger Reihenfolge hergestellt.

Die erfindungsgemäßen Reaktivfarbstoffe besitzen gute Naß- und Lichtechtheiten und werden zum Färben und Bedrucken von Baumwolle eingesetzt.

EP 0 582 886 A1

Phthalocyaninreaktivfarbstoffe sind bereits aus JP-A-56 128 375 und JP-A-56 123 483 (= US-A-4 396 549) bekannt.

Die vorliegende Erfindung betrifft neue Phthalocyaninreaktivfarbstoffe, die in Form der freien Säure der Formel (1) entsprechen,

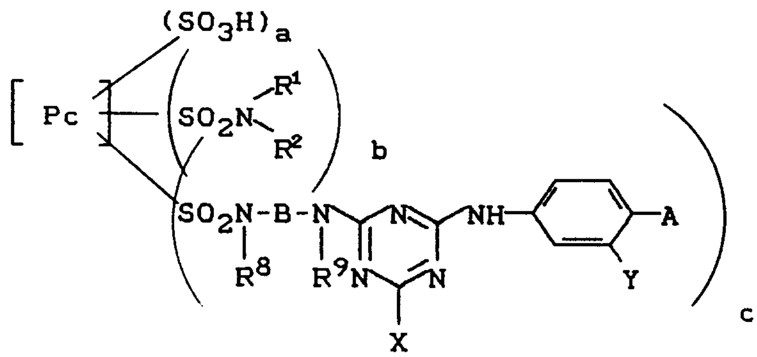 (1)

worin

Pc ein metallfreies oder metallhaltiges Phthalocyanin bedeutet,

$R^1$, $R^2$ unabhängig voneinander für Wasserstoff oder gegebenenfalls substituiertes $C_1$-$C_6$-Alkyl stehen können oder zusammen mit dem durch sie eingeschlossenen Stickstoffatom einen gegebenenfalls weitere Heteroatome enthaltenden heterocyclischen Rest bilden,

B einen zweiwertigen aliphatischen, cycloaliphatischen aromatischen oder araliphatischen Rest bedeutet,

X für Chlor oder Fluor steht,

Y für $SO_2CH=CH_2$ oder $SO_2CH_2CH_2Z$ steht, worin Z einen alkalisch abspaltbaren Substituenten bedeutet,

A eine Gruppe der Formel -O-$R^3$ oder -S-$R^4$ oder

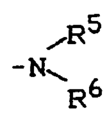

bedeutet,

worin

$R^3$ für einen substituierten aliphatischen Rest,

$R^4$ für einen aliphatischen oder aromatischen Rest und

$R^5$ für Wasserstoff, einen aliphatischen, cycloaliphatischen oder araliphatischen Rest steht und

$R^6$ für $R^5$ oder für einen aromatischen Rest steht oder die Reste $R^5$ und $R^6$ gegebenenfalls unter Einschluß eines weiteren Heteroatoms einen Ring bilden können,

a = 0 bis 3

b = 0 bis 3

c = 1 bis 3

wobei a + b + c = 3 bis 4,

$R^8$, $R^9$ unabhängig voneinander für Wasserstoff oder gegebenenfalls substituiertes $C_1$-$C_6$-Alkyl stehen.

In einer bevorzugten Ausführungsform stehen $R^1$, $R^2$, $R^8$ und $R^9$ unabhängig voneinander für gegebenenfalls durch $OCH_3$, OH, COOH, $SO_3H$ oder Phenyl substituiertes $c_1$-$c_4$-Alkyl, z.B. Methyl, Ethyl, Isopropyl, Propyl, n-Butyl, iso-Butyl, sek.-Butyl, tert.-Butyl, $\beta$-Hydroxyethyl, $\beta$-Sulfatoethyl oder $\beta$-Methoxyethyl.

Y steht beispielsweise für $SO_2CH_2CH_2OSO_3H$, $SO_2CH_2CH_2Cl$, $SO_2CH_2CH_2S_2O_3H$, $SO_2CH_2CH_2OPO_3H_2$

oder

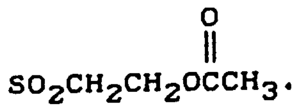

In einer bevorzugten Ausführungsform steht $R^5$ und $R^6$ unabhängig voneinander für den Rest eines aliphatisch substituierten Amins oder eines heterocyclischen Amins, bei dem $R^5$ und $R^6$ zusammen mit dem gemeinsamen N-Atom einen Ring bilden.

Heteroatome zur Ringbildung von $R^5$ und $R^6$ sind bevorzugt O, NH, $NCH_3$, $NCOCH_3$, N-$C_2H_4SO_2CH=CH_2$, S, SO oder $SO_2$.

Die aliphatischen Reste in der Bedeutung von $R^3$, $R^4$, $R^5$ und $R^6$ sind bevorzugt $C_1$-$C_6$-Alkylreste, insbesondere solche, die gegebenenfalls durch Heteroatome unterbrochen und/oder gegebenenfalls substituiert sind.

Beispiele für unterbrechende Heteroatome sind:
O, S, $SO_2$, $NR^7$, $NR^7CO$, $NR^7SO_2$, wobei $R^7$ für Wasserstoff oder $C_1$-$C_4$-Alkyl steht.

Als Substituenten der aliphatischen Reste $R^3$, $R^4$, $R^5$ und $R^6$ können beispielsweise genannt werden:
OH, Cl, F, COOH, $SO_3H$, $OSO_3H$, $SO_2CH=CH_2$, CN, $OCH_3$, $SO_2CH_2CH_2Cl$, $SO_2CH_2CH_2OSO_3H$, $NR^7$-W, wobei W für eine heterocyclische Reaktivgruppe steht, insbesondere eine solche aus der Reihe der Monochlor- und der Monofluortriazinreihe oder der Fluorpyrimidinreihe.

Die cycloaliphatischen Reste $R^5$ sind insbesondere 5- oder 6-gliedrige Cycloalkylreste.

Die araliphatischen Reste $R^5$ sind insbesondere solche der Formel

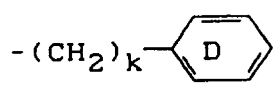 ,

wobei k = 1 bis 4 und der Ring D beispielsweise durch Cl, $NO_2$, COOH, $SO_3H$, $CH_3$, $OCH_3$, $SO_2CH_2CH_2OSO_3H$, $SO_2CH=CH_2$ oder $CH_2SO_2CH_2CH_2OSO_3H$ substituiert sein kann.

Aromatische Reste $R^4$ und $R^6$ sind insbesondere Phenyl- oder Naphthylreste, die gegebenenfalls substituiert sind, insbesondere mit $OCH_3$, $OC_2H_5$, $OCH_2CH_2OH$, $CH_3$, $C_2H_5$, - $CH(CH_3)_2$, F, Cl, Br, COOH, $SO_3H$, $NO_2$, $SO_2CH_2CH_2OSO_3H$, $SO_2CH=CH_2$, $CH_2SO_2CH_2CH_2OSO_3H$, $CH_2SO_2CH=CH_2$.

Als aliphatische Reste in der Bedeutung von $R^5$ und $R^6$ können als Beispiele aufgeführt werden:
$CH_3$, $C_2H_5$, $CH_2CH_2OH$, $CH_2CH_2OCH_3$, $CH_2CH_2OC_2H_5$ $CH_2CH_2OCH_2OSO_3H$, $CH_2SO_3H$, $CH_2CH_2SO_3H$, $CH_2CH_2OSO_3H$, $CH_2COOH$, $CH_2CH_2COOH$, $CH_2CH_2SO_2CH_2CH_2OSO_3H$, $CH_2CH_2OCH_2CH_2SO_2CH_2CH_2Cl$, $CH_2CH_2OCH_2CH_2SO_2CH=CH_2$, $CH_2CH_2NHCOCH_2CH_2COOH$, $CH_2CH_2CH_2SO_2CH_2CH_2OSO_3$, $CH_2CH_2CH_2SO_2CH=CH_2$, $CH_2CH_2CH_2SO_2CH_2CH_2Cl$,

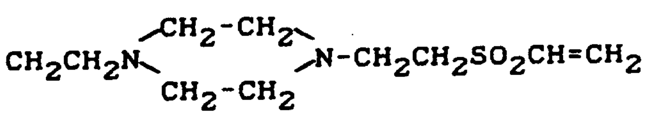

Beispiele für aliphatische Reste in der Bedeutung von $R^4$ sind die für $R^5$ und $R^6$ genannten Reste, die durch COOH, $OCH_3$, $SO_3H$ oder $OSO_3H$ substituiert sind.

Beispiele für den Rest B sind folgende:

a) aliphatisch oder cycloaliphatisch
$-CH_2CH_2-$, $-CH_2CH_2-CH_2-$, $-(CH_2)_6-$, $-CH_2CH_2OCH_2CH_2-$,

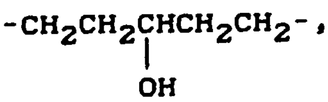, 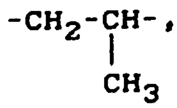, 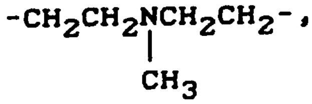,

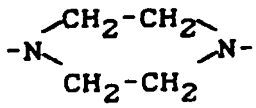, 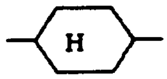

b) araliphatisch

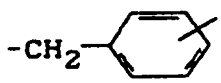, 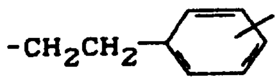

c) aromatisch

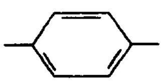, 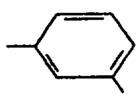, 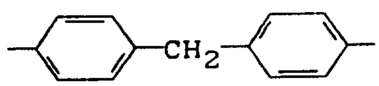,

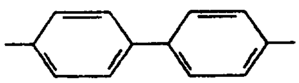, 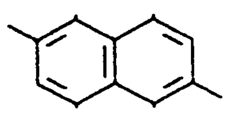, 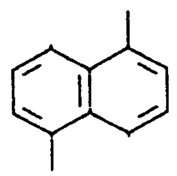,

Die Phenylen- oder Naphtylenringe können selbstverständlich Substituenten enthalten, beispielsweise $C_1$-$C_4$-Alkyl wie $CH_3$, $C_2H_5$, $C_1$-$C_4$-Alkoxy wie $OCH_3$, $OC_2H_5$, Halogen wie Cl oder Br, oder saure Gruppen wie $SO_3H$, COOH.

Der Phthalocyaninrest Pc kann metallfrei sein, er ist jedoch vorzugsweise metallhaltig. Als Metalle kommen Kobalt, Nickel und Kupfer in Betracht, bevorzugt ist Kupfer.

In den Farbstoffen der Formel (1) trägt jeder Benzolring des Phthalocyaninrestes vorzugsweise nicht mehr als einen, der mit a, b oder c indizierten Substituenten, wobei die Substituenten vorzugsweise nur in 3- oder nur in 4-Stellung gebunden sind.

Im Rahmen der Formel (1) sind Verbindungen bevorzugt, in denen $R^1$, $R^2$, $R^8$ und $R^9$ Wasserstoff bedeuten, weiterhin solchen in denen B für

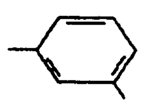

oder $-(CH_2)_{2-6}-$ ,
A für

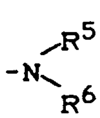 ,

insbesondere für
$-NH_2$, $-NHCH_2$, $-NHC_2H_5$, $-N(CH_3)_2$,

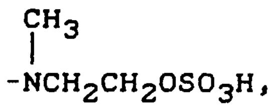

$-NHCH_2CH_2OSO_3H$,

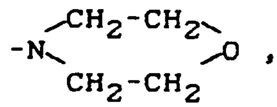

$-NH(CH_2)_{2-4}SO_2CH_2CH_2OSO_3H$ $-NHCH_2CH_2OCH_2CH_2SO_2CH_2CH_2OSO_3H$, $-NHCH_2CH_2SO_3H$

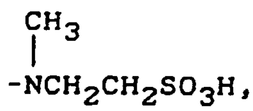

$-NHCH_2COOH$,

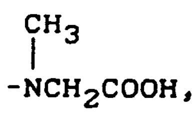

$-NHCH_2CH_2OCH_3$ steht und X Chlor bedeutet.

Weiterhin bevorzugt sind solche, in denen

a = 1 bis 2
b = 0 bis 1
c = 1 bis 3, insbesondere 1,5 bis 2,5 bedeutet,

wobei die Summe aus a, b und c maximal 4 ist.

Weiterhin bevorzugt sind solche Verbindungen, in denen B für

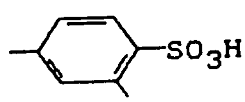

steht,
A die angegebene bevorzugte Bedeutung hat und X für Fluor steht.

Gegenstand der Erfindung sind weiterhin Verfahren zur Herstellung der Verbindungen der Formel (1), welche dadurch gekennzeichnet sind, daß man Phthalocyaninsulfochlorid der Formel

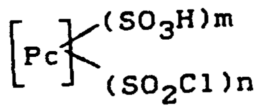

(2)

worin Pc die angegebene Bedeutung hat, m eine Zahl von 0 bis 3, n eine Zahl von 1 bis 4 darstellt und die Summe aus m und n höchstens 4 beträgt, mit einem Diamin der Formel

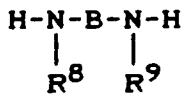

(3)

worin $R^8$, $R^9$ und B die angegebene Bedeutung haben, gegebenenfalls in Gegenwart eines Amins der Formel

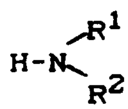

(4)

worin $R^1$ und $R^2$ die angegebene Bedeutung hat,
zu einer Verbindung der Formel

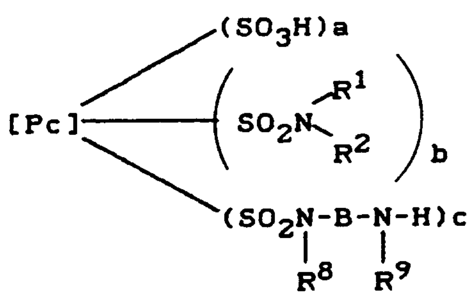

(5)

kondensiert.

Zu Verbindungen der Formel (5) gelangt man auch dadurch, daß man Phthalocyaninsulfochloride (2) mit Aminen der Formel (6)

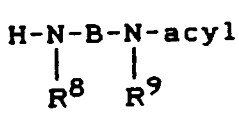

(6)

worin $R^8$, $R^9$ und B die angegebene Bedeutung haben, und acyl für einen Acylrest insbesondere für Acetyl, Formyl, Oxalyl, Methoxycarbonyl oder Ethoxycarbonyl steht, gegebenenfalls in Gegenwart eines Amins der Formel (4) zu einer Verbindung der Formel

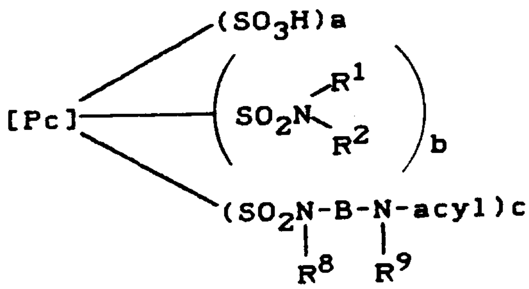

(7)

kondensiert und anschließend durch Erhitzen im sauren oder alkalischen Medium zu einer Verbindung der Formel (5) verseift.

Das aminogruppenhaltige Phthalocyanin der Formel (5) und das Amin der Formel

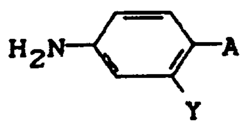

(8)

worin A und Y die angegebene Bedeutung haben, werden dann mit Cyanurchlorid oder Cyanurfluorid in beliebiger Reihenfolge umgesetzt.

Als Ausgangsverbindungen der Formel (2) finden beispielsweise Sulfonsäurechloride oder sulfogruppenhaltige Sulfonsäurechloride des metallfreien Phthalocyanins Verwendung, vorzugsweise jedoch solche von metallhaltigen Phthalocyaninen.

Die Herstellung der Phthalocyaninsulfonsäurechloridsulfonsäuren der Formel (2) erfolgt in bekannter Weise durch Behandlung von Kupferphthalocyanin oder Nickelphthalocyanin oder deren Sulfonsäuren mit Chlorsulfonsäure bei 100 °C bis 145 °C, wobei Temperaturen zwischen 110 °C und 138 °C bevorzugt sind. Hierbei kann man durch Variation der Chlorsulfonsäuremenge das Verhältnis der Sulfochloridgruppen und Sulfonsäuregruppen zueinander variieren. Daneben kann man das Verhältnis von m und n durch Nachbehandlung der Chlorsulfonsäure-Schmelze mit einer geeigneten Menge Thionylchlorid, Phosphoroxychlorid oder Phosphorpentachlorid vorzugsweise bei Temperaturen zwischen 70 °C und 95 °C variieren (Deutsche Patentschrift DE 891121).

Je nach der gewählten Herstellungsart befinden sich die Sulfonsäuregruppen im Phthalocyaninmolekül in 4- und/oder in 3-Stellung, was davon abhängt, ob man zu ihrer Herstellung von der 4-Sulfophthalsäure beziehungsweise einem Gemisch der 4- und der 3-Sulfophthalsäure ausgeht oder ob man sie durch Sulfonierung beziehungsweise durch direkte Sulfochlorierung des unsubstituierten Phthalocyanins herstellt, wobei im letztgenannten Fall alle vier Sulfo-beziehungsweise Sulfochloridgruppen vorzugsweise in 3-Stellung gebunden sind.

Die Amine der Formeln (3) beziehungsweise (6) werden gegenüber dem Phthalocyaninsulfochlorid der Formel (2) in einem molaren Überschuß von 0 bis 70 % über die durch den jeweiligen Zahlenwert des Index c (vergleiche Formel 1) vorgegebene molare Mengen hinaus eingesetzt.

Die Umsetzung von Verbindungen der Formel (2) mit den Aminen (3) beziehungsweise (6) und gegebenenfalls (4) wird vorzugsweise im wäßrigen, oder aber im wäßrigorganischen Medium im pH-Bereich von 4 bis 11 und bei Temperaturen zwischen 0 °C und 60 °C durchgeführt, wobei man zweckmäßigerweise die freiwerdende Säure durch Zusatz von Alkali, wie z.B. Natriumbicarbonat, Soda, Natronlauge, Natriumacetat, Lithiumacetat, Lithiumhydroxid oder Kaliumcarbonat neutralisiert beziehungsweise abgepuffert oder gegebenenfalls die freiwerdende Säure durch einen Überschuß an Amin (4) bindet, Als organische Lösungsmittel kommen beispielsweise aliphatische Alkohole wie Methanol oder Ethanol, halogenierte Aromaten wie Chlorbenzol oder Dichlorbenzol oder Dimethylformamid und ähnliche in Frage.

Man kann die Kondensation auch in Gegenwart eines Reaktionsbeschleunigers wie Pyridin, Pyridincarbonsäure oder Pyridinsulfonsäure ausführen. Die Amine (3) beziehungsweise (6) und gegebenenfalls (4) können gleichzeitig oder nacheinander in beliebiger Reihenfolge mit den Verbindungen (2) umgesetzt werden, Enthält das Phthalocyaninsulfonsäurechlorid (2) weniger Sulfonsäuregruppen als sie für die Verbindung (1) erwünscht sind, so werden diejenigen Sulfochloridgruppen, die mit den Aminen (3)

beziehungsweise (6) und gegebenenfalls (4) nicht reagiert haben, zu Sulfonsäuregruppen hydrolysiert.

Die Verseifung der Verbindungen der Formel (7) zu den Verbindungen (5) erfolgt durch ein- bis vierstündiges Erhitzen auf 70 bis 100 °C, insbesondere 80 bis 90 °C in 1- bis 2-normaler Säure oder Lauge. Vorzugsweise verwendet man Salzsäure oder Natronlauge.

Die Kondensation der Amine (5) und (8) mit Cyanurchlorid oder Cyanurfluorid erfolgt vorzugsweise im wäßrigen Medium, wobei man für die erste Kondensationsstufe eine Temperatur von -5 bis 20 °C und für die zweite Kondensationsstufe eine Temperatur von 0 °C bis 70 °C wählt. Bei der Acylierung mit Cyanurfluorid arbeitet man bei niedrigen Temperaturen als mit Cyanurchlorid. Der pH-Bereich bei den einzelnen Acylierungsstufen liegt zwischen 2 und 9, insbesondere zwischen 5 und 6.

Die Farbstoffe der allgemeinen Formel (1) fallen bei der Synthese gewöhnlich in Form von Gemischen der Einzelfarbstoffe an, die sich voneinander durch die Substitutionsgrade a, b und c unterscheiden, weshalb bei der Aufstellung der die erfindungsgemäßen Farbstoffe abdeckenden Formeln gebrochene Werte der Indices a, b und c angegeben werden. Diese gebrochenen Zahlen stellen Durchschnittswerte dar, die experimentell und analytisch ermittelt werden können.

Beispiele für Diamine der Formel (3) sind:

m-Phenylendiamin, 1-Methoxy-2,4-diaminobenzol, 1-Chlor-2,4-diaminobenzol, 1-Methyl-2,4-diaminobenzol, 1-Sulfo-2,4-diaminobenzol, 1-Carboxy-2,4-diaminobenzol, p-Phenylendiamin, 1-Sulfo-2,5-diaminobenzol, 1-Carboxy-2,5-diaminobenzol, 1-N-Methylaminomethyl-4-amino-benzol, 1-(β-Aminoethyl)-4-aminobenzol, 4,4-Diaminodiphenyl-2-sulfonsäure, Ethylendiamin, N-Methylethylendiamin, N,N'-Dimethyl-ethylendiamin, N,N'-Diethylethylendiamin, Propylendiamin, N-Methylpropylendiamin, N,N'-Dimethylpropylendiamin, Butylendiamin, Pentylendiamin und Hexylendiamin, Piperazin, N-β-Hydroxyethyl-ethylendiamin.

Beispiele für Amine der Formel (6) sind:

Monoacetylethylendiamin Monoacetylpropylendiamin Monoacetylbutylendiamin Monoacetylhexamethylendiamin Monoacetylpiperazin 2-Aminoformanilid, 3-Aminoacetanilid, 3-Aminophenyloxyamidsäure, 4-Aminoformanilid, 4-Aminoacetanilid, 2-Aminoacetanilid, 4-Amino-(acetylmethyl)-anilin, 4-Aminophenyloxyamidsäure, 2,5-Dichlor-4-aminoacetanilid, 4-Amino-2-formylaminotoluol, 4-Amino-2-acetylaminotoluol, 2-Amino-4-acetylaminotoluol, 2-Amino-4-(acetyläthylamino)-toluol, [(3-Amino-4-methylphenyl)-amino]-oxoessigsäure, (4-Amino-4-diphenyl)-oxamidsäure, 2-Amino-4-acetylaminobenzoesäure, 2-Amino-5-acetylaminobenzoesäure, 3-Amino-5-acetylaminobenzoesäure, 4-Amino-4-acetylaminodiphenyl-2-sulfonsäure, 2-Sulfo-4-aminophenyl-oxamidsäure und (5-sulfo-3-amino-2-methylphenyl)-oxamidsäure.

Amine der Formel (4) sind beispielsweise:

Ammoniak, Methylamin, Ethylamin, n-Propylamin, Ethanolamin, Diethanolamin, Taurin, N-Methyltaurin, Morpholin.

Verbindungen entsprechend der allgemeinen Formel (8), die zur Synthese der erfindungsgemäßen Verbindungen dienen, sind beispielsweise:

4-Dimethylamino-3-(β-sulfatoethylsulfonyl)-anilin, 4-Ethylamino-3-(β-sulfatoethylsulfonyl)-anilin, 4-(N-Morpholino)-3-(β-sulfatoethylsulfonyl)-anilin, 4-N-(β-Sulfatoethyl)-amino-3-(β-sulfatoethylsulfonyl)-anilin, 4-[N-Methyl-N-(β-sulfatoethyl)]-amino-3-(β-sulfatoethylsulfonyl)-anilin, 4-N-(β-Sulfoethyl)-amino-3-(β-sulfatoethylsulfonyl)-anilin, 4-[N-Methyl-N-(β-sulfoethyl)]-amino-3-(β-sulfatoethylsulfonyl)-anilin, 4-N-(Carboxymethyl)-amino-3-(β-sulfatoethylsulfonyl)-anilin, 4-N-[β-(4-Sulfophenyl)-ethyl]-amino-3-(β-sulfatoethylsulfonyl)-anilin, 4-Methylamino-3-(β-sulfatoethylsulfonyl)-anilin, 4-N-( -Sulfato-n-propyl)-amino-3-(β-sulfatoethylsulfonyl)-anilin, 4-N-[β-(β'-Sulfato-ethoxy)-ethyl]-amino-3-(β-sulfatoethylsulfonyl)-anilin, 4-[N-Methyl-N-( -sulfato-n-propyl)]-amino-3-(β-sulfatoethylsulfonyl)-anilin, 4-[(β-Sulfatoethyl)-thio]-3-(β-sulfatoethylsulfonyl)-anilin, 3-(β-Sulfatoethylsulfonyl)-1,4-diaminobenzol, 4-N-(β-Sulfatoethyl)-amino-3-(β-thiosulfatoethylsulfonyl)-anilin, 4-N-(β-Phosphatoethyl)-amino-3-(β-sulfatoethylsulfonyl)-anilin, 4-N-(β-Sulfato-n-propyl)-amino-3-(β-sulfatoethylsulfonyl)-anilin, 4-N-(β-Sulfato-n-propyl)-amino-3-(β-silfatoethlysulfonyl)-anilin, 4-N-(β, -Disulfato-n-propyl)-amino-3-(β-sulfatoethylsulfonyl)-anilin, 4-N-(β-Carboxyethyl)-amino-3-(β-sulfatoethylsulfonyl)-anilin, 4-N-[β-(β'-Sulfatoethylamino)-ethyl]-amino-3-(β-sulfatoethylsulfonyl)-anilin, 4-N-(β-[N'-Methyl-N'-(β-sulfatoethyl)-amino]-ethyl]-amino-3-(β-Sulfatoethylsulfonyl)-anilin, 4-N-[(β-Sulfato-α-methyl)-ethyl]-amino-3-(β-sulfatoethylsulfonyl)-anilin, 4-Diethylamino-3-(β-sulfatoethylsulfonyl)-amino, 4-N-(β-[4'-(β'-Sulfatoethylsulfonyl)-phenyl]-ethyl)-amino-3-(β-sulfatoethylsulfonyl)-anilin, 4-β-Sulfatoethoxy-3-(β-sulfatoethylsulfonyl)-anilin, 4-[β-(β'-Sulfatoethoxy)-ethoxy-3-(β-sulfatoethylsulfonyl)-anilin, 4-Amino-3-(β-sulfatoethylsulfonyl)-anilin.

Die Ausgangsverbindungen der allgemeinen Formel (8) können analog bekannter Verfahrensweisen aus den entsprechenden Aminoverbindungen der allgemeinen Formel (8a)

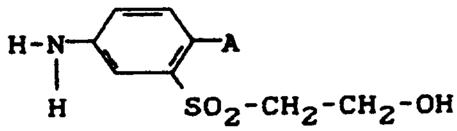

(8a)

in welcher A die obengenannte Bedeutung hat, hergestellt werden, so beispielsweise durch Umsetzung mit üblichen Sulfatierungs- oder Phosphatierungsmitteln zur Veresterung in die entsprechenden β-Sulfatoethylsulfonyl beziehungsweise β-Phosphatoethylsulfonyl-Derivate.

Die β-Sulfatoethylsulfonyl-Verbindung entsprechend der allgemeinen Formel (8) kann sodann in an und für sich bekannter Verfahrensweise in deren Vinylsulfonyl-Verbindung und diese wiederum in deren β-Thiosulfatoethylsulfonyl-Verbindung überführt werden. Verbindungen entsprechend den allgemeinen Formeln (8) und (8a) sind beispielsweise aus EP-A-01 53 559, EP-A-01 71 611 und EP-A-01 97 418 bekannt und können analog den dortigen Angaben hergestellt werden.

Die Isolierung der nach den vorstehend beschriebenen Verfahren erhaltenen Phthalocyaninfarbstoffen erfolgt in üblicher weise durch Aussalzen, beispielsweise mit Natrium- oder Kaliumchlorid, oder durch Eindampfen der neutralen wäßrigen Farbstofflösung, vorzugsweise bei mäßig erhöhter Temperatur und vermindertem Druck oder durch Sprühtrocknung.

Die Reaktivfarbstoffe der Formel (1) ergeben Färbungen mit guten Naß- und Lichtechtheiten. Besonders hervorzuheben ist es, daß die Farbstoffe eine gute Löslichkeit und Elektrolytlöslichkeit bei guten Ausziehungseigenschaften und hoher Farbstoff-Fixierung aufweisen, und daß sich die nicht fixierten Anteile leicht entfernen lassen.

Die neuen Farbstoffe der Formel (1) eignen sich zum Färben und Bedrucken von Hydroxyl- oder Amidgruppen enthaltenden Materialien, wie Textilfaser-, Fäden und Geweben aus Wolle, Seide, synthetischen Polyamid und Polyurethanfasern und zum waschechten Färben und Bedrucken von nativer oder regenerierter Cellulose, wobei die Behandlung von Cellulosematerialien zweckmäßigerweise in Gegenwart säurebindender Mittel und gegebenenfalls durch Hitzeeinwirkung nach den für Reaktivfarbstoffe bekannt gewordenen Verfahren erfolgt.

Die angegebenen Formeln sind die der entsprechenden freien Säuren. Die Farbstoffe wurden im allgemeinen in Form von Alkalisalze, insbesondere der Na-Salze isoliert und zum Färben eingesetzt.

Die in den Beispielen genannten Gewichte beziehen sich auf die freie Säure. Die in den Beispielen angegebenen Farbkennzahlen beziehen sich auf Colour Index Hue Indication Chart (Indicator Numbers).

Beispiel 1

0,1 mol wasserfeuchte Paste des Aminophthalocyaninfarbstoffes der Formel

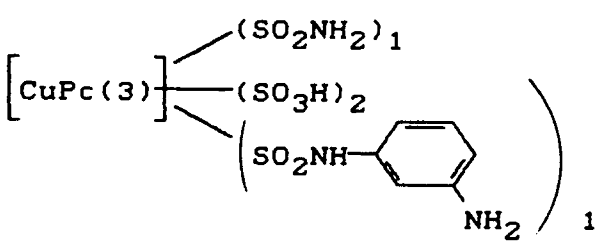

(hergestellt nach den Angaben von Beispiel 2 aus EP-A 12349) werden in 1 l Wasser verrührt und auf pH 6 gestellt.

Dazu gibt man die wäßrige Lösung von 0,1 mol des Dichlortriazinproduktes der Formel

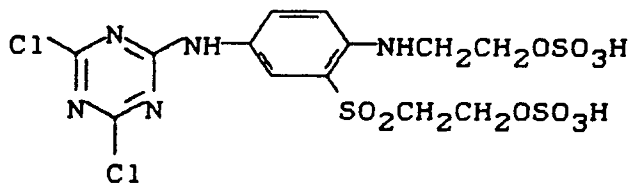

und erwärmt auf 45 °C und hält dabei den pH durch Zugabe von Natriumhydrogencarbonat zwischen 5 und 6. Nach beendeter Kondensation (Abnahme der Dichlortriazinverbindung wird im HPLC verfolgt) wird der Farbstoff aus der klaren Lösung durch Zugabe von 10 Volumen % Kochsalz ausgesalzen. Nach dem Absaugen, Trocknen und Mahlen erhält man ein blaues Farbstoffpulver, das sich leicht in Wasser mit türkisblauer Farbe löst.

Der Farbstoff enspricht der Formel (durchschnittliche Zusammensetzung)

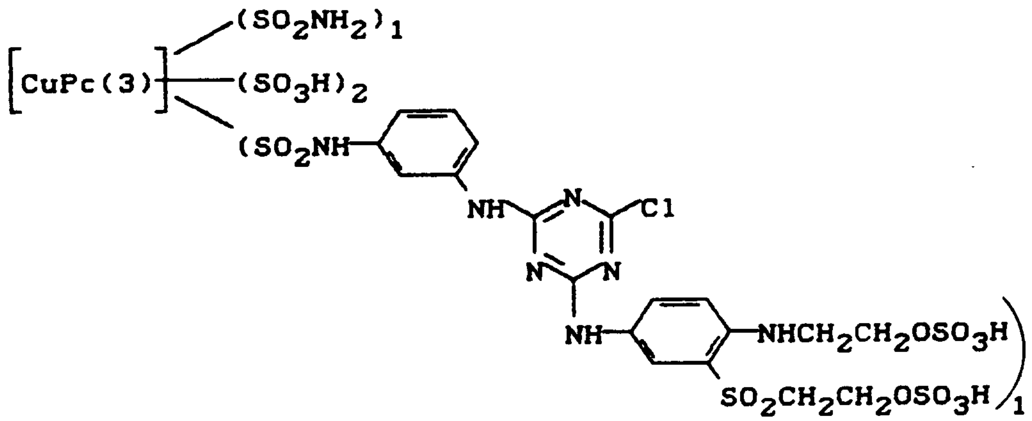

Nach einem der für Reaktivfarbstoffe üblichen Applikationsverfahren erhält man auf Baumwolle kräftige türkisblaue Färbungen (Farbkennzahl 16).

Die in diesem Beispiel verwendete Dichlortriazinverbindung wird wie folgt erhalten. 0,1 mol 4-N-(β-Sulfatoethyl)-amino-3-(β-sulfatoethylsulfonyl)-anilin (hergestellt nach Angaben von Beispiel 1 aus DE-OS 3704660) werden in 1 l Eiswaser gelöst. Man gibt dann 0,1 mol Cyanurchlorid zu und rührt bei 0 bis 3 °C und pH 5 bis 6, den man durch Einstreuen von Natriumhydrogencarbonat hält. Die Kondensation ist rasch beendet.

Weitere Farbstoffe, die Baumwolle türkisblau färben, erhält man nach den Angaben dieses Beispiels, wenn man die gleiche Aminophthalocyaninverbindung verwendet, jedoch anstelle von 4-N-(β-Sulfatoethyl)-amino-3-(β-sulfatoethylsulfonyl)-anilin eine äquivalente Menge der nachfolgend aufgeführten Aniline (8b) verwendet.

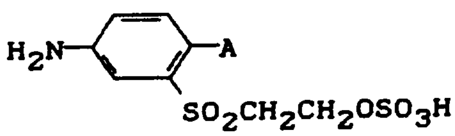

(8b)

| Beispiel | A |
|---|---|
| 2 | Amino |
| 3 | Morpholino |
| 4 | Ethylamino |
| 5 | Methylamino |
| 6 | Diethylamino |
| 7 | N-Methyl-N-β-sulfatoethylamino |
| 8 | N-Methyl-N-β-sulfoethylamino |
| 9 | N-β-(β'-Sulfatoethoxy)-ethylamino |
| 10 | β-(β'-Sulfatoethoxy)-ethoxy |
| 11 | β-Ethoxy-ethylamino |
| 12 | Carboxymethylamino |
| 13 | N-Methyl-N-β-propylamino |
| 14 | γ-Sulfato-n-propylamino |
| 15 | β-Sulfatoethylthio |
| 16 | β-Carboxyethylamino |
| 17 | N-β-(4'-sulfophenyl)-ethylamino |
| 18 | N-β-(4'-(β'-sulfatoethylsulfonyl)-phenyl)-ethylamino |
| 19 | N-β-(β'-(β''-Sulfatoethylsulfonyl)-ethoxy)-ethylamino |
| 20 | β-Sulfatoethoxy |
| 21 | β-Ethoxy-ethylamino |
| 22 | Morpholino |
| 23 | Di-isopropylamino |
| 24 | Di-n-propylamino |
| 25 | Isopropylamino |
| 26 | Cyclohexylamino |

Die Beispiele 1-26 besitzen einen $\lambda_{max}$-Wert von 620 nm.

Beispiel 27

0,1 mol wasserfeuchte Paste des Aminophthalocyaninfarbstoffs der Formel

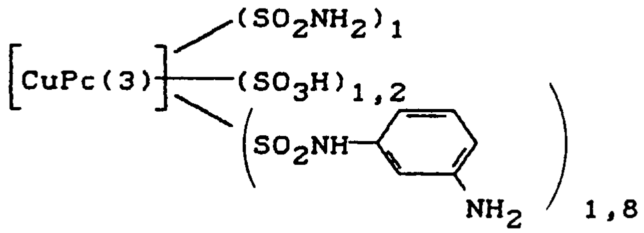

(hergestellt nach den Angaben von Beispiel 2 der europäischen Patentschrift 12349 unter Verwendung der doppelten Menge 3-Aminophenyloxamidsäure) werden in 0,5 l Wasser neutral gerührt. Dazu gibt man die Lösung von 0,18 mol der in Beispiel 1 verwendeten Dichlortriazinverbindung und erwärmt auf 45 bis 50 °C. Der pH wird dabei durch Zugabe von Natriumhydrogencarbonat zwischen 5,5 und 6 gehalten. Nach beendeter Kondensation wird der Farbstoff aus der klaren Lösung durch Zugabe von 15 Volumen % Kochsalz ausgesalzen. Nach dem Absaugen, Trocknen und Mahlen erhält man ein blaues Farbstoffpulver, das sich leicht in Wasser unter türkisblauer Farbe löst. Der Farbstoff entspricht folgender durchschnittlicher Zusammensetzung.

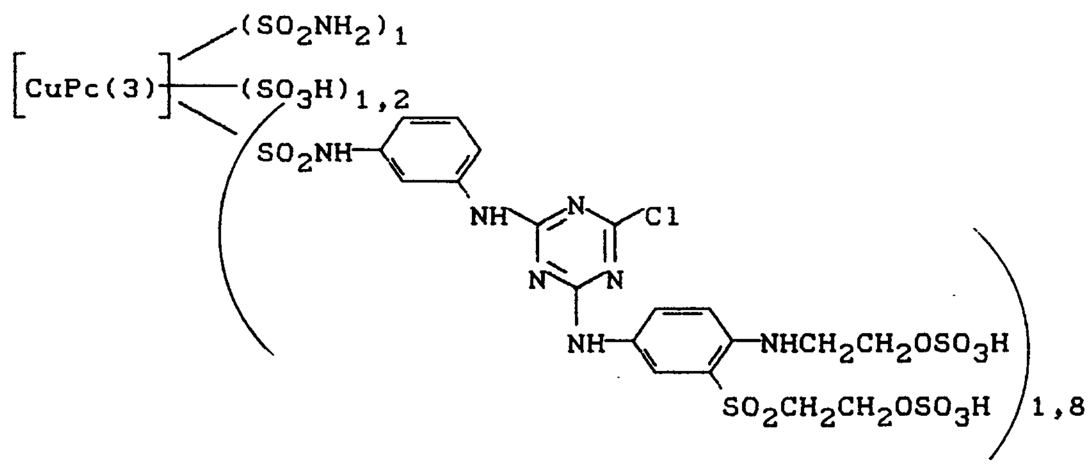

Der Farbstoff färbt Baumwolle in einem kräftigen Türkisblau (Farbkennzahl 16) ($\lambda_{max}$ = 616 nm).

Weitere wertvolle Farbstoffe, die Baumwolle gleichfalls türkisblau färben, erhält man nach den Angaben dieses Beispiels, wenn man die gleiche Aminophthalocyaninverbindung verwendet, jedoch anstelle von 4-N-(β-Sulfatoethyl)-3-(β-sulfatoethylsulfonyl)-anilin eine äquivalente Menge der in den Beispielen 2 bis 27 verwendeten Aniline (8b) einsetzt.

Beispiel 28

0,1 mol wasserfeuchte Paste des Aminophthalocyaninfarbstoffs der Formel

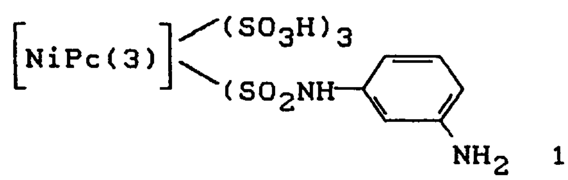

(hergestellt nach den Angaben von Beispiel 1 aus EP-A-12349) werden in 1 l Wasser verrührt und auf pH 6 gestellt. Dazu gibt man die Lösung von 0,1 mol des Dichlortriazinproduktes der Formel

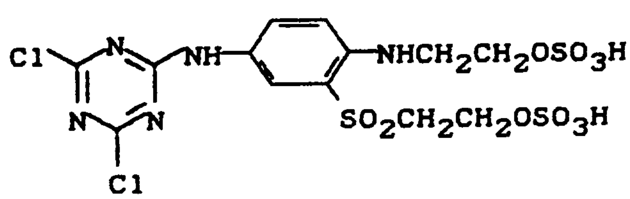

und erwärmt auf 45 ° C und hält dabei den pH durch Zugabe von Natriumhydrogencarbonat zwischen 5 und 6. Nach beendeter Kondensation wird der Farbstoff aus der klaren Lösung durch Zugabe von 15 Volumen % Kochsalz abgeschieden. Nach dem Absaugen, Trocknen und Mahlen erhält man ein blaues Farbstoffpulver, das sich mit grünger Farbe in Wasser löst.

Der Farbstoff entspricht der Formel (durchschnittliche Zusammensetzung)

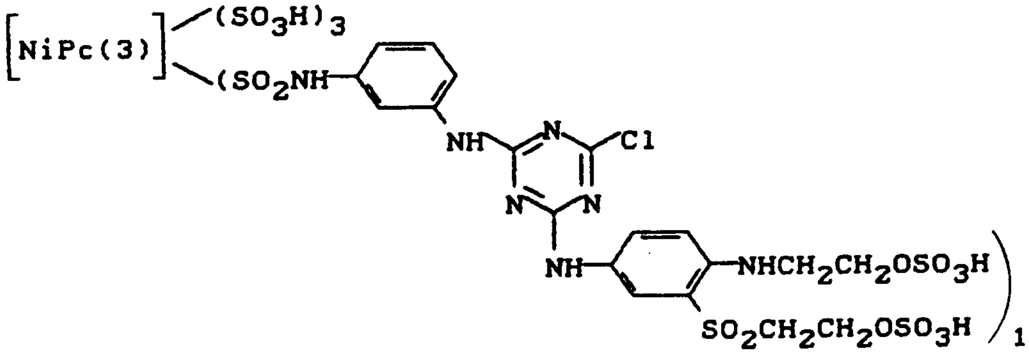

Es färbt Baumwolle in grünen Tönen mit sehr guten Echtheiten (Farbkennzahl 17).

Weitere wertvolle Farbstoffe, die Baumwolle in grünen Tönen färben, erhält man nach den Angaben dieses Beispiels, wenn man die gleiche Aminophthalocyaninverbindung einsetzt, jedoch anstelle von 4-N-($\beta$-Sulfatoethyl)-amino-3-$\beta$-sulfatoethylsulfonyl-anilin eine äquivalente Menge der in den Beispielen 2 bis 26 verwendeten Aniline (8a) einsetzt.

Verwendet man anstelle der in dem Beispiel 1, 27 und 28 eingesetzten Aminophthalocyanine die nachfolgend aufgeführten, setzt die in den Beispielen 1 bis 26 verwendeten Aniline (8b) ein und arbeitet nach den Angaben von Beispiel 1, so resultieren gleichfalls Farbstoffe mit ähnlich guten Eigenschaften.

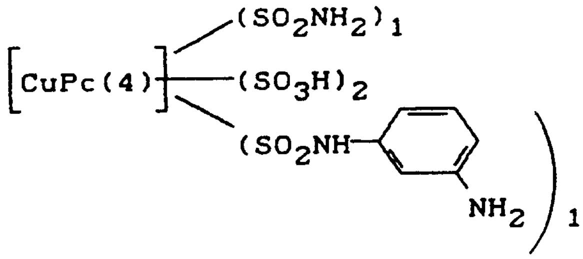

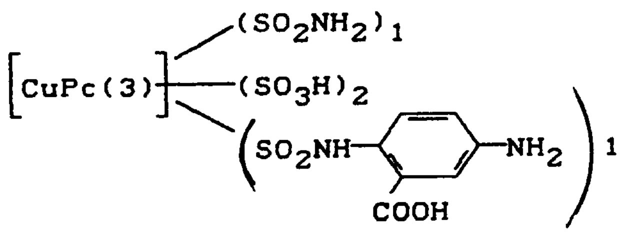

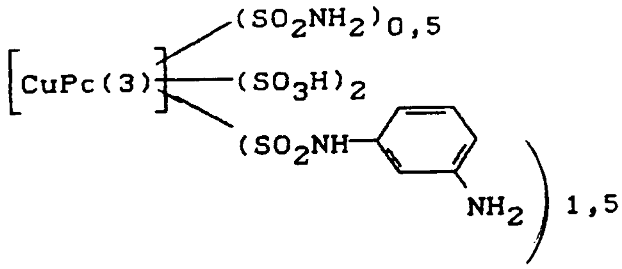

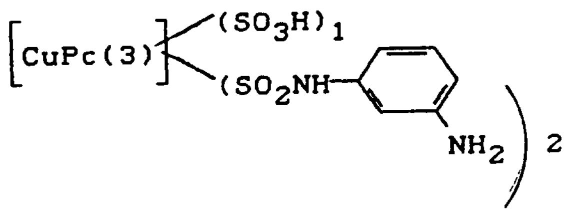

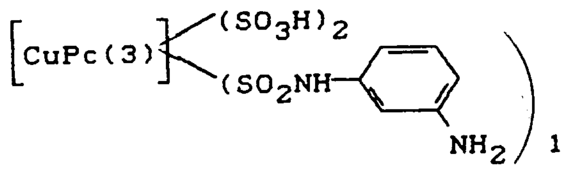

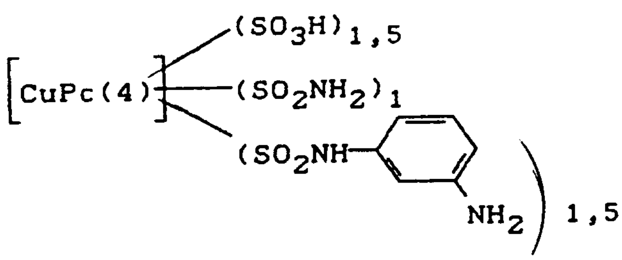

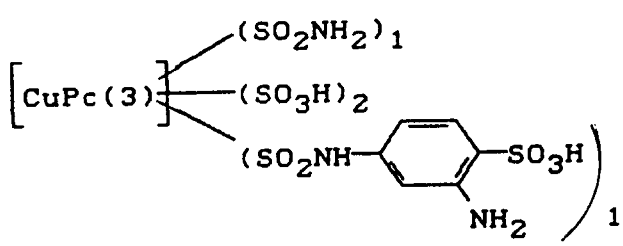

Beispiel 29

0,1 mol des Dichlortriazin-Phthalocyaninfarbstoffs der Formel

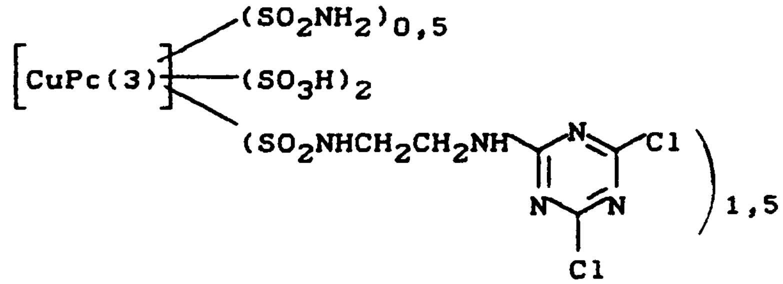

(hergestellt nach den Angaben von Beispiel 1 aus DE-OS 34 05 204), die als neutrale Lösung in ca. 1 l Wasser vorliegen, werden mit 0,1 mol 4-N-Morpholino-3-β-sulfatoethylsulfonyl-anilin versetzt und mehrere Stunden auf 45 bis 50 °C erwärmt. Nach beendeter Kondensation wird der Farbstoff ausgesalzen, abgesaugt, getrocknet und gemahlen. Der Farbstoff löst sich leicht in Wasser mit türkisblauer Farbe und färbt Baumwolle türkisblau mit sehr guten Echtheiten. Er hat folgende durchschnittliche Zusammensetzung.

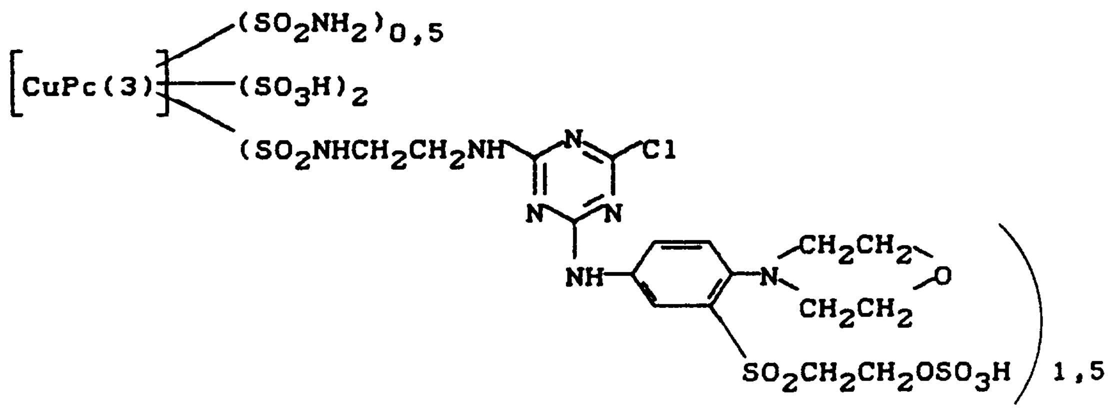

Arbeitet man nach den Angaben dieses Beispiels, verwendet jedoch anstelle von 4-N-Morpholino-3-β-sulfatoethylsulfonylanilin eine äquivalente Menge der in den Beispielen 1 bis 21 und 23 bis 26 eingesetzten Aniline (8b), so resultieren gleichfalls türkisblaue Färbungen (Farbkennzahl 16)($\lambda_{max}$ = 614 nm).

Verwendet man statt des im Beispiel 29 eingesetzten Phthalocyanin-dichlortriazinfarbstoffs die nachfolgend aufgeführten und setzt die in den Beispielen 1 bis 21 und 23 bis 26 verwendeten Aniline (8b) ein, so erhält man Farbstoffe mit ähnlich guten Eigenschaften.

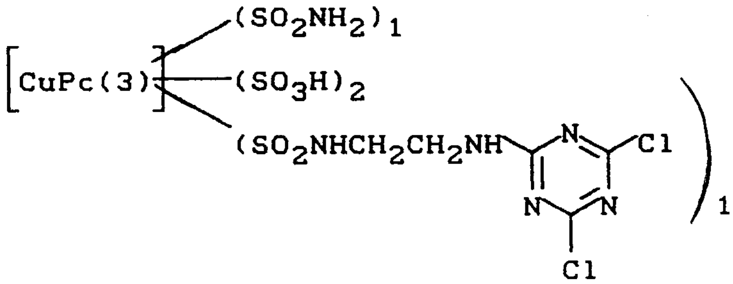

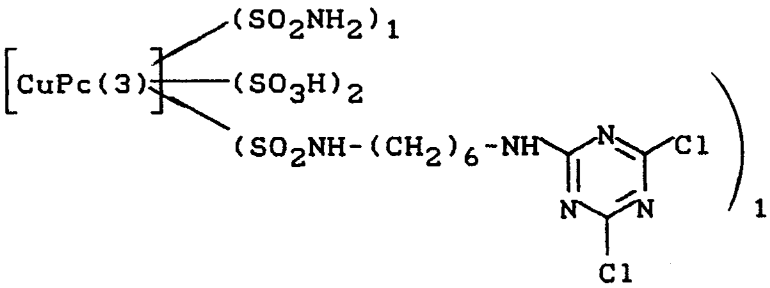

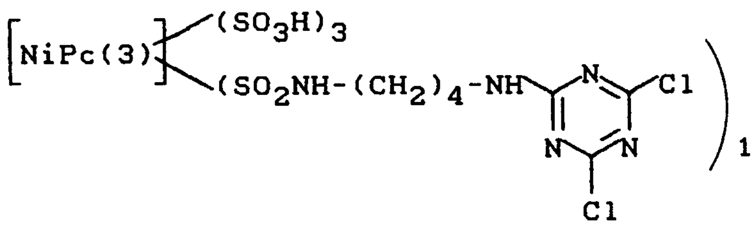

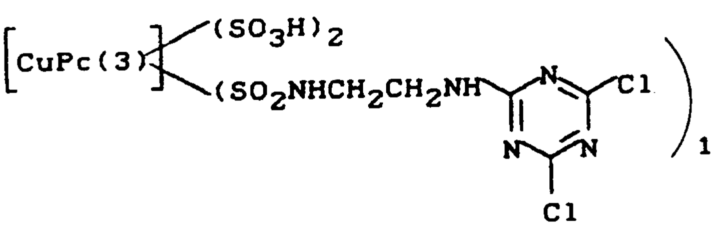

Beispiel 30

0,1 mol des Aminophthalocyaninfarbstoffs mit der durchschnittlichen Zusammensetzung

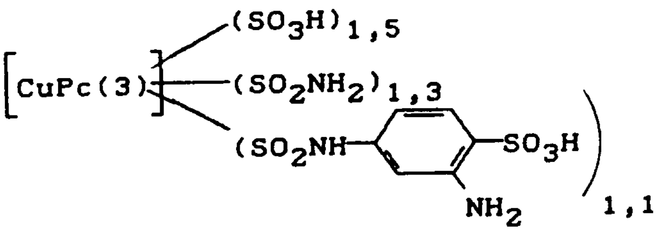

(hergestellt nach den Angaben von Beispiel 1 aus DE-OS 15 69 823) werden in 1 l Eiswasser gelöst. Man tropft dann 15 g Trifluortriazin ein, hält durch gleichzeitige Zugabe von Natriumhydrogencarbonat einen pH von 5,5 bis 6,5 ein. Nach beendeter Kondensation werden 0,11 mol 4-N-(β-sulfatoethyl)-amino-3-β-sulfatoethylsulfonyl-anilin zugesetzt und bei pH 5,5 bis 6,5 und 5 bis 10 °C kondensiert, wobei der pH durch Einstreuen von Natriumhydrogencarbonat eingehalten wird. Nach beendeter Reaktion wird der Farbstoff der Formel

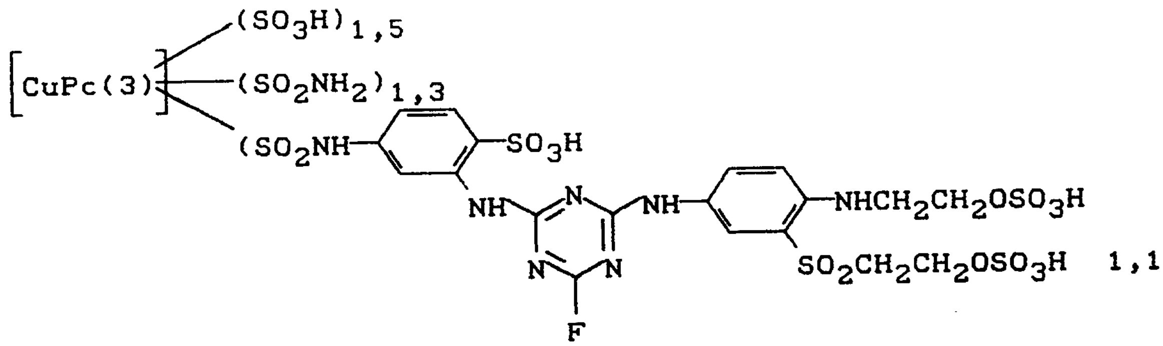

ausgesalzen, abgesaugt, getrocknet und gemahlen. Das resultierende Farbstoffpulver löst sich leicht mit blauer Farbe in Wasser und färbt Baumwolle türkisblau (λ = 618 nm).

Weitere Farbstoffe, die Baumwolle türkisblau färben, erhält man nach den Angaben dieses Beispiels, wenn man die gleiche Aminophthalocyaninverbindung verwendet, jedoch anstelle von 4-N-(β-Sulfatoethyl)-amino-3-(β-sulfatoethylsulfonyl)-anilin eine äquivalente Menge der in den Beispielen 2 bis 26 genannten Aniline (8b) verwendet.

## Patentansprüche

1. Phthalocyaninreaktivfarbstoffe, die in Form der freien Säure der Formel (1) entsprechen,

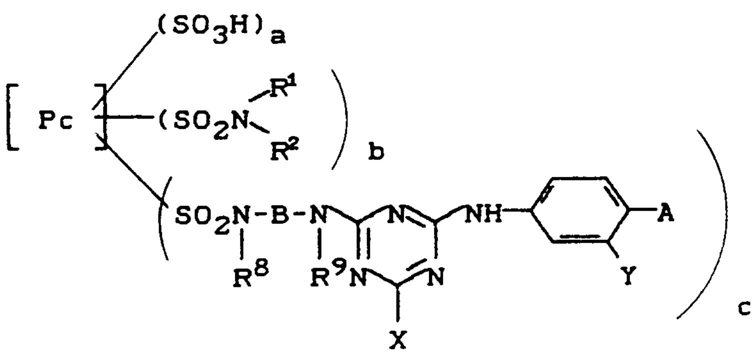

(1)

worin

| | |
|---|---|
| Pc | ein metallfreies oder metallhaltiges Phthalocyanin bedeutet, |
| $R^1$, $R^2$ | unabhängig voneinander für Wasserstoff oder gegebenenfalls substituiertes $C_1$-$C_6$-Alkyl stehen können oder zusammen mit dem durch sie eingeschlossenen Stickstoffatom einen gegebenenfalls weitere Heteroatome enthaltenden heterocyclischen Rest bilden, |
| B | einen zweiwertigen aliphatischen, cycloaliphatischen, aromatischen oder araliphatischen Rest bedeutet, |
| X | für Chlor oder Fluor steht |
| Y | für $-SO_2CH=CH_2$ oder $-SO_2CH_2CH_2Z$ steht, worin |
| Z | ein alkalisch abspaltbarer Substituent bedeutet, |
| A | eine Gruppe der Formel |

-O-$R^3$, -S-$R^4$ oder

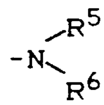

bedeutet, worin

$R^3$ für einen substituierten aliphatischen $C_1$-$C_6$-Rest steht,

$R^4$ für einen gegebenenfalls substituierten aliphatischen $C_1$-$C_6$-Rest oder aromatischen Rest steht,

$R^5$ für Wasserstoff, einen aliphatischen, cycloaliphatischen oder araliphatischen Rest steht,

$R^6$ die für $R^5$ genannte Bedeutung hat oder für einen aromatischen Rest steht oder die Reste $R^5$ und $R^6$, gegebenenfalls unter Einschluß eines weiteren Heteroatoms, einen heterocyclischen Ring bilden,

a für eine Zahl von 0 bis 3,

b für eine Zahl von 0 bis 3,

c für eine Zahl von 1 bis 3 steht, wobei die Summe von a, b und c maximal 4 ist,

$R^8$, $R^9$ unabhängig voneinander für Wasserstoff oder gegebenenfalls substituiertes $C_1$-$C_6$-Alkyl stehen.

**2.** Phthalocyaninreaktivfarbstoffe gemäß Anspruch 1, worin

Pc für den Rest einer Kupfer-, Nickel- oder Kobalt-Phthalocyanins steht.

**3.** Phthalocyaninreaktivfarbstoffe gemäß den Ansprüchen 1 bis 2, dadurch gekennzeichnet, daß

A für

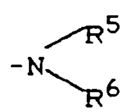

und

Y für -$SO_2CH=CH_2$ oder -$SO_2CH_2CH_2OSO_3H$ steht,

wobei $R^5$ und $R^6$ die in Anspruch 1 angegebenen Bedeutungen haben,

**4.** Phthalocyaninreaktivfarbstoffe gemäß den Ansprüchen 1, 2 oder 3, worin

B für ein aliphatisches $C_1$-$C_6$-Brückenglied steht.

**5.** Phthalocyaninreaktivfarbstoffe gemäß den Ansprüchen 1, 2 oder 3, dadurch gekennzeichnet, daß

B für Phenylen steht,

**6.** Phthalocyaninreaktivfarbstoffe gemäß wenigstens einem der Ansprüche 1 bis 5, dadurch gekennzeichnet, daß

$R^1$, $R^2$, $R^8$ und $R^9$ Wasserstoff bedeuten,

$R^5$ und $R^6$ unabhängig voneinander für den Rest eines aliphatisch substituierten Amins oder eines heterocyclischen Amins, bei dem $R^5$ und $R^6$ zusammen mit dem gemeinsamen N-Atom einen Ring bilden, stehen.

**7.** Phthalocyaninreaktivfarbstoffe gemäß wenigstens einem der Ansprüche 1 bis 6, dadurch gekennzeichnet, daß

B für

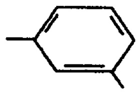

und

X für Cl steht.

**8.** Phthalocyaninreaktivfarbstoffe gemäß wenigstens einem der Ansprüche 1 bis 6, dadurch gekennzeichnet, daß

B für

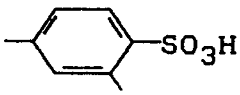

und

X für F steht.

**9.** Verfahren zur Herstellung der erfindungsgemäßen Farbstoffe der Formel (1) gemäß Anspruch 1, dadurch gekennzeichnet, daß man Verbindungen der Formel (5)

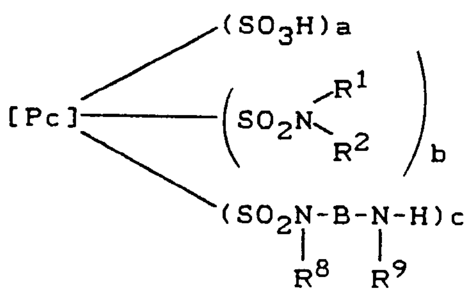

(5)

worin Pc, $R^1$, $R^2$, $R^8$, $R^9$, B, a, b und c die unter Anspruch 1 angegebene Bedeutung haben, mit einem Amin der Formel (8)

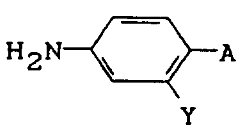

(8)

worin A und Y die unter Anspruch 1 angegebene Bedeutung haben, in beliebiger Reihenfolge mit Cyanurchlorid oder Cyanurfluorid umsetzt.

**10.** Verwendung der Farbstoffe (1) gemäß Anspruch 1 zum Färben und Bedrucken von Baumwolle.

Europäisches Patentamt

# EUROPÄISCHER RECHERCHENBERICHT

Nummer der Anmeldung
EP 93 11 1915

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.5) |
|---|---|---|---|
| X | DE-A-34 05 204 (SUMITOMO CHEMICAL COMPANY LTD.)<br>* Seite 15, Zeile 15; Abbildung 3 *<br>* Seite 21, Zeile 31 - Seite 22, Zeile 3; Anspruch 1; Beispiel 71 *<br>--- | 1,2,4,9,10 | C09B62/44<br>D06P3/66 |
| X<br><br><br>D<br>D | EP-A-0 073 267 (SUMITOMO CHEMICAL COMPANY LTD.)<br>* Seite 10, Zeile 5 - Zeile 8; Ansprüche 1,5; Beispiele 2,8 *<br>& JP-A-56 123 483 (...)<br>& US-A-4 396 549<br>--- | 1,2,4,9,10 | |
| A | GB-A-1 118 785 (ICI)<br>* das ganze Dokument *<br>--- | 1,5,10 | |
| A | PATENT ABSTRACTS OF JAPAN<br>vol. 9, no. 28 (C-264)(1751) 6. Februar 1985<br>& JP-A-59 174 653 (SUMITOMO KAGAKU KOGYO K. K.) 3. Oktober 1984<br>* Zusammenfassung *<br>----- | 1,2,4,9,10 | |
| | | | **RECHERCHIERTE SACHGEBIETE (Int.Cl.5)** |
| | | | C09B<br>D06P |

Der vorliegende Recherchenbericht wurde für alle Patentansprüche erstellt

| Recherchenort | Abschlußdatum der Recherche | Prüfer |
|---|---|---|
| DEN HAAG | 18. November 1993 | KETTERER, M |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
& : Mitglied der gleichen Patentfamilie, übereinstimmendes Dokument

EPO FORM 1503 03.82 (P04C03)